Europäisches Patentamt

European Patent Office

Office européen des brevets

(11) Veröffentlichungsnummer: **0 141 154 B1**

(12) **EUROPÄISCHE PATENTSCHRIFT**

(45) Veröffentlichungstag der Patentschrift:
20.12.89

(51) Int. Cl.⁴: **B 23 Q 3/155,** B 23 B 41/02

(21) Anmeldenummer: 84110607.3

(22) Anmeldetag: 06.09.84

(54) Werkzeugwechsler an einer Tiefbohrmaschine.

(30) Priorität: 21.10.83 DE 3338239

(43) Veröffentlichungstag der Anmeldung:
15.05.85 Patentblatt 85/20

(45) Bekanntmachung des Hinweises auf die Patenterteilung:
20.12.89 Patentblatt 89/51

(84) Benannte Vertragsstaaten:
AT BE CH DE FR GB IT LI LU NL SE

(56) Entgegenhaltungen:
CH-A- 371 938
CH-A- 465 362
DE-A- 2 048 495
DE-B- 1 912 369
GB-A- 1 226 232

(73) Patentinhaber: TBT Tiefbohrtechnik GmbH,
Siemensstrasse 1, D-7433 Dettingen/Erms (DE)

(72) Erfinder: Jenny, Werner, Sternbergstrasse 15,
D-7420 Münsingen (DE)

(74) Vertreter: Dreiss, Hosenthien & Fuhlendorf,
Gerokstrasse 6, D-7000 Stuttgart 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Vorrichtung zum Werkzeugwechsel in einer Tiefbohrmaschine, die mit einer oder mehreren drehangetriebenen (5) Bohrspindeln (4, 4') versehen ist, die auf einem Schlitten (6) in Richtung auf ein Werkstück (2) bewegbar sind, mit folgenden Merkmalen:

(a) die Vorrichtung weist ein Werkzeugmagazin auf, das aus mehreren Aufnahmeeinrichtungen besteht;

(b) die Vorrichtung weist ferner einem um eine Achse schwenkbaren Wechselarm auf, der mit Greifzangen versehen ist;

(c) der Wechselarm ist schwenkbar zwischen einer

(c1) Ablage- und Ladeposition, in der er an das Werkzeugmagazin abgenutzte Werkzeuge übergibt und aus dem Werkzeugmagazin scharfe Werkzeuge entnimmt, und einer

(c2) Arbeitsposition, in der er aus der oder den Bohrspindeln abgenutzte Werkzeuge entnimmt und an die Bohrspindeln scharfe Werkzeuge abgibt.

Man hat in der Vergangenheit bei Tiefbohrmaschinen erheblichen Aufwand betrieben, um den Werkstücktransport zu automatisieren. Man hat jedoch dem Wechsel der Werkzeuge noch nicht in demselben Umfang Aufmerksamkeit geschenkt. Dies wird jedoch dann wichtig, wenn miteinander verkettete Werkzeugmaschinen eingesetzt werden. Die Unterbrechungen des normalen Taktablaufes zum Werkzeugwechsel müssen dabei unbedingt so geringfügig wie möglich sein. Dies ist umso mehr von Bedeutung, als bei verketteten Maschinen ja ganz verschiedenartige Bearbeitungsvorgänge stattfinden, die zu völlig unterschiedlichen Zeiten einen Werkzeugwechsel erforderlich machen.

Eine derartige Einrichtung ist z. B. aus der DE-OS-2 512 254 bekannt. Bei dieser Einrichtung ist das Magazin bzgl. der Bohrspindel so angeordnet, daß die Achsen der Werkzeuge im Magazin senkrecht zur Achse der Bohrspindel angeordnet sind. Um dennoch mit Hilfe eines Wechselarms eine Überführung der Werkzeuge von der Arbeitsposition (Arbeitsspindelstellung) in die Ablage- und Ladeposition (Magazinstellung) herbeiführen zu können, trägt der Wechselarm drehbar einen Greiferarm, sowie dieser ferner ebenfalls drehbar einen Greiferflügel mit zwei Greiferzangen. Zur Veränderung der Lage der Greiferzangen von Arbeitsposition und Ablage- und Ladeposition ist also nicht nur ein Verschwenken des Wechselarms, sondern auch noch eine Drehung des Greiferarms am Wechselarm und der Greiferflügel am Greiferarm, jeweils um 90° erforderlich. Außerdem benötigt man zwei Greifzangen für das Auswechseln an nur einer Bohrspindel und es ist ferner erforderlich, den Greiferarm auf einem parallel zur Bohrspindel verschiebbaren Greiferschlitten vorzusehen, um den Werkzeugwechsel durchführen zu können. Diese Anordnung ist sehr umständlich, da sie es erforderlich macht, auf dem Wechselarm zwei weitere Teile (Greiferschlinge, Greiferflügel) gegeneinander und gegenüber dem Wechselarm drehbar vorzusehen. Die Anordnung ist außerdem nicht erweiterbar derart, daß gleichzeitig an mehr als nur einer Bohrspindel die Werkzeuge ausgewechselt werden können, ohne daß der Bewegungsablauf grundsätzlich geängert werden müßte.

Aus der DE-AS 1 912 369 ist eine Vorrichtung zum Werkzeugwechsel an Werkzeugmaschinen bekannt geworden, bei der das Werkzeugspannfutter in vertikaler Richtung hin- und herbeweglich und der Bearbeitungstisch, auf den das Werkstück aufgespannt wird, in zueinander senkrechten Richtungen verschiebbar ist. Am oberen Ende einer Säule ist ein Werkzeugspeichermagazin drehbar gelagert, das in radialer Richtung sich erstreckende Aussparungen für die gleitende Führung von Werkzeugaufnahmeblöcken aufweist. In jedem dieser Aufnahmeblöcke ist herausnehmbar eine Reihe von Werkzeugen angebracht, die sich mit Hilfe des Werkzeugwechselmechanismus dem Block entnehmen und in diesen wieder einsetzen lassen. Der Werkzeugwechselmechanismus wird durch einen Werkzeugkörper gebildet, der mit zwei aufeinander zulaufenden Bahnen versehen ist, mittels derer zwei Werkzeugwechselarme für die Erfassung der Werkzeuge gleitend gelagert sind. Der eine Arm dient dabei zur Entnahme eines benutzten Werkzeuges, während der andere Arm zur Einspannung des neuen Werkzeuges dient. Auch diese Anordnung weist einen relativ komplizierten Bewegungsablauf auf.

Aufgabe der Erfindung ist es demgegenüber, eine Einrichtung der eingangs genannten Art derart auszubilden, daß sie, insbesondere bei Maschinen, die ein- oder mehrspindlig ausgebildet sein können, in möglichst einfacher Weise den Werkzeugwechsel ermöglicht. Diese Vorrichtung muß konzipiert sein, daß für den Fall einer mit herkömmlichen Mitteln festgestellten Abnutzung der Werkzeuge diese schnell zu entnehmen und durch nicht abgenutzte, d. h. scharfe Werkzeuge ersetzt werden können.

Die Erfindung ist durch folgende Merkmale gekennzeichnet:

(d) die Aufnahmeeinrichtungen des Magazins, die Achse des Wechselarms und die Bohrspindeln parallel zueinander angeordnet sind;

(e) es ist eine Transporteinrichtung vorgesehen, die die Werkzeuge in der Ablage- und Ladeposition in axialer Richtung aus den Greifzangen in die Aufnahmeeinrichtungen bzw. umgekehrt schiebt;

(f) die Beförderung der Werkzeuge von der Ablage- und Ladeposition in Arbeitsposition bzw. umgekehrt erfolgt bei gleichbleibender zur Achse der Bohrspindel stets parallel versetzter Orientierung der Werkzeuge und bei Bewegung des Wechselarms in nur einer Ebene;

(g) das Magazin ist derart verstellbar, daß in jeder Stellung des Magazins eine Gruppe von Aufnahmeeinrichtungen, deren Zahl gleich der Zahl der Greifzangen bzw. Bohrspindeln ist, in der Ablage- und Ladeposition des Wechselarms mit den Greifzangen derart ausgerichtet ist, daß eine Ablage der abgenutzten Werkzeuge von den Greifzangen an die Aufnahmevorrichtungen des Magazins bzw. ein Laden der Greifzangen mit scharfen Werkzeugen aus den Aufnahmeeinrichtungen mittels der Transporteinrichtung erfolgt.

Vorteilhafte Weiterbildungen der Erfindung sind in den Unteransprüchen definiert.

Der besondere Vorteil hinsichtlich Einfachheit des Aufbaues und Zeitersparnis bei der Durchführung folgt daraus, daß derselbe Greifer sowohl die abgenutzten Werkzeuge aus der Tiefbohrmaschine entnimmt als auch wieder einsetzt, wobei sowohl die Ablage der abgenutzten Werkzeuge aus dem Greifer in das Magazin als auch das Laden des Greifers mit scharfen Werkzeugen aus dem Magazin in deselben Position des Greifers, nämlich der Ablage- und Ladeposition, aufeinanderfolgend stattfindet und lediglich ein zeitlich kurzer Zwischenschritt zur Weiterbewegung des Magazins erforderlich ist. Die Erfindung ist besonders im Hinblick auf kurze Wege der beweglichen Teile ausgebildet, wobei der Wechselarm trotz Zugriff zu allen Aufnahmeeinrichtungen des Magazins stets dieselbe Bewegung ausführt, was durch die Anordnung und den Aufbau des Magazins besonders vorteilhaft durchgeführt werden kann.

Nach einer der vorteilhaften Weiterbildungen der Erfindung ist – durch entsprechende Anschläge beim Laden – sichergestellt, daß die Lage der Werkzeuge in den einzelnen Aufnahmeeinrichtungen des Magazins davon abhängt, ob es sich um ein durch die genannte Transporteinrichtung in das Magazin eingeschobene abgenutzte Werkzeuge oder um nicht abgenutzte, scharfe Werkzeuge handelt, mit denen das Magazin von vorne herein geladen worden ist. Je nach dieser Lage, die durch Meßeinrichtungen feststellbar ist, kann nun die Feststellung getroffen werden, ob für einen Werkzeugwechsel in den gerade bereitstehenden Aufnahmevorrichtungen noch scharfe Werkzeuge zur Verfügung stehen. Nur dann, wenn es sich um scharfe Werkzeuge handelt, wird der Wechselzyklus fortgesetzt; ergibt sich, daß nur noch abgenutzte Werkzeuge da sind, so muß der Wechselzyklus unterbrochen und das Magazin neu geladen werden.

Ein Ausführungsbeispiel der Erfindung und ihrer vorteilhaften Weiterbildungen wird im folgenden unter Bezugnahme auf die beigefügten Zeichnungen beschrieben.

Es stellen dar:

Figur 1 eine schematische Seitenansicht einer Tiefbohrmaschine;

Figur 2 eine Draufsicht entsprechend den Pfeilen II–II in Fig. 1 auf die Tiefbohrmaschine nach Fig. 1;

Figur 3 eine Vorderansicht entsprechend den Pfeilen III–III in Fig. 1 der Tiefbohrmaschine nach Fig. 1;

Figur 4 eine Draufsicht (entsprechend den Pfeilen IV–IV in Fig. 3) auf die Transporteinrichtung, die Bestandteil der Tiefbohrmaschine nach Fig. 1 bis 3 ist;

Figur 4a einen Schnitt entlang der Linie IVa–IVa in Fig. 4;

Figur 5 einen Schnitt entlang der Linie V–V in Fig. 4;

Figur 6 eine Draufsicht auf das Magazin der Tiefbohrmaschine nach Fig. 1 bis 3;

Figur 6a–6c Schnitte entlang den Linien VIa–VIa, VIb–VIb, VIc–VIc in Fig. 6;

Figur 7 einen Schnitt entlang der Linie VII–VII in Fig. 6;

Figur 7a einen Schnitt entlang der Linie VIIa–VIIa in Fig. 7;

Figur 8 eine Ansicht in Richtung der Pfeile VIII–VIII in Fig. 6;

Figur 9 eine schematische Darstellung des in der Tiefbohrmaschine nach Fig. 1 bis 3 verwendeten Wechselarms 9;

Figur 10 einen Schnitt entlang der Linie X–X in Fig. 9;

Figur 11 einen Schnitt entlang der Linie XI–XI in Fig. 9.

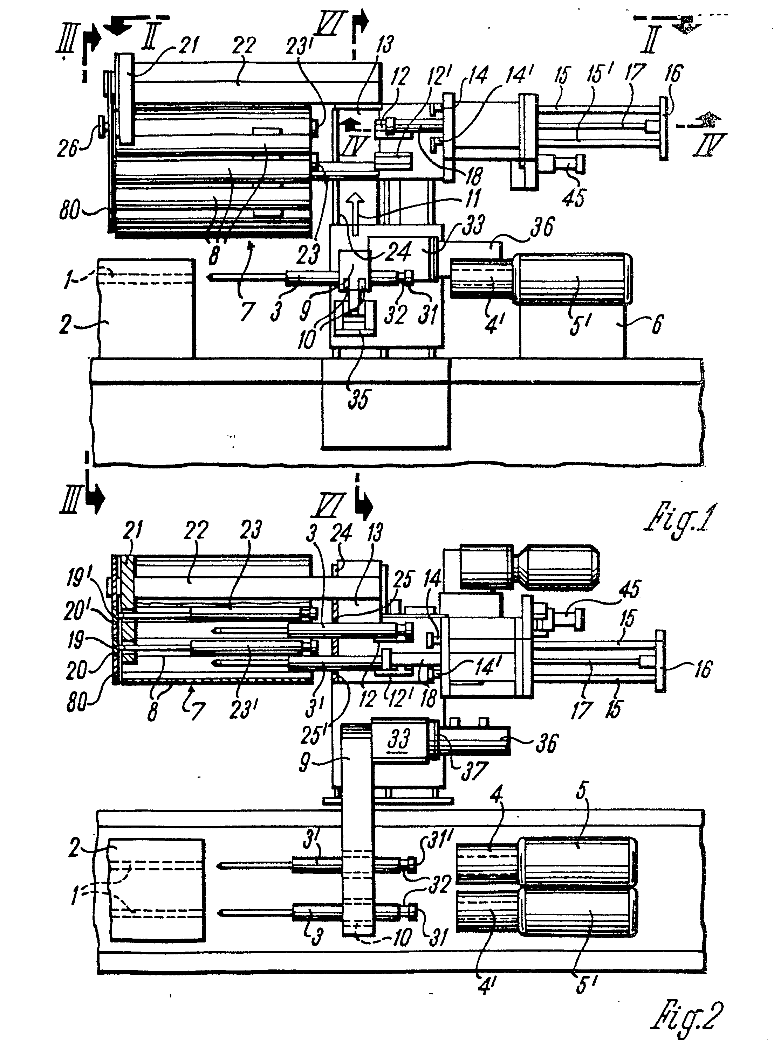

Auf der in den Figuren 1 bis 3 jeweils in Gesamtansicht schematisch dargestellten zweispindligen Tiefbohrmaschine werden Bohrungen 1 in einem Werkstück 2, z. B. dem Zylinderblock eines Kraftfahrzeugmotors, mit Hilfe von Tiefbohrwerkzeugen 3, 3' gebohrt; es kann sich dabei um das sog. Einlippen-Bohrverfahren, das BTA-Verfahren, oder das Ejektor-Verfahren handeln; entsprechend sind die Tiefbohrwerkzeuge ausgebildet. Sie werden von Bohrspindeln 4, 4' die von Motoren 5, 5' angetrieben werden, aufgenommen. Bohrspindeln 4, 4' und Motoren 5, 5' sind auf einem Schlitten 6 angeordnet und zum Zweck des Vorschubs in Richtung des Werkstücks 2 verfahrbar.

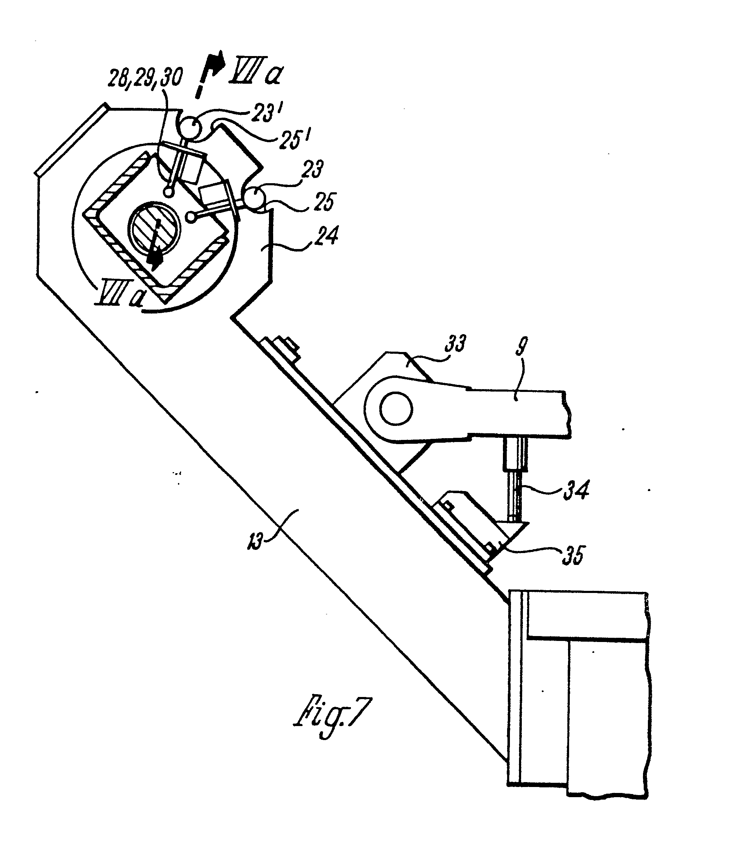

Die Ausbildung der Tiefbohrmaschine dient nun dazu, die Tiefbohrwerkzeuge 3, 3' bei Abnutzung – die über die Messung des Anpreßdruckes zur Erzeugung eines bestimmten Vorschubs festgestellt wird – aus den Bohrspindeln 4, 4' zu entnehmen, in einem allgemein mit 7 bezeichneten Magazin abzulegen, sowie darauf folgend neue, d. h. nicht abgenutzte Tiefbohrwerkzeuge aus dem Magazin 7 zu entnehmen und wiederum in die Bohrspindel 4, 4' einzusetzen. Die Tiefbohrwerkzeuge sind, sofern sie in das Magazin 7 eingeschoben sind, mit 23, 23' bezeichnet. Dabei sind zwei Positionen möglich (siehe Fig. 7a) durch die sich abgenutzte und noch nicht abgenutzte Tiefbohrwerkzeuge unterscheiden (siehe dazu weiter unten). Wenn die Werkzeuge aus dem Magazin ausgezogen sind, und/oder sich in Transport- oder Arbeitsposition befinden, sind sie mit 3, 3' bezeichnet.

Die Bohrspindeln 4, 4' sind mit geeigneten Spannvorrichtungen ausgestattet. Eine hierfür geeignete Spannvorrichtung ist beispielsweise in der Ep-A-0 128 257, veröffentlicht am 19.12.84, desselben Anmelders beschrieben.

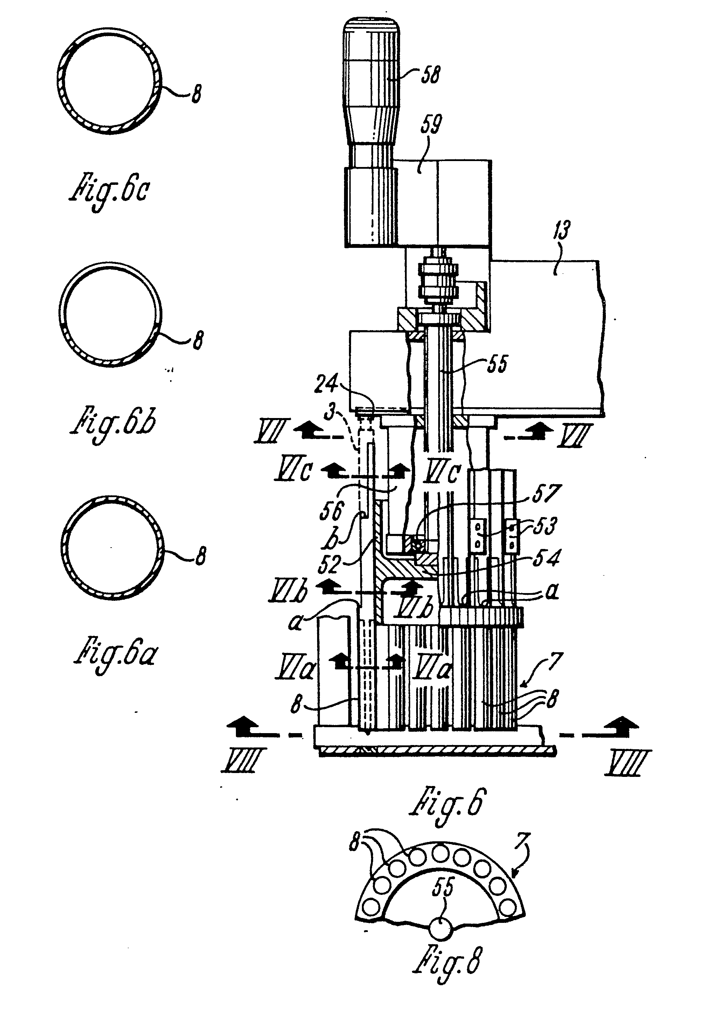

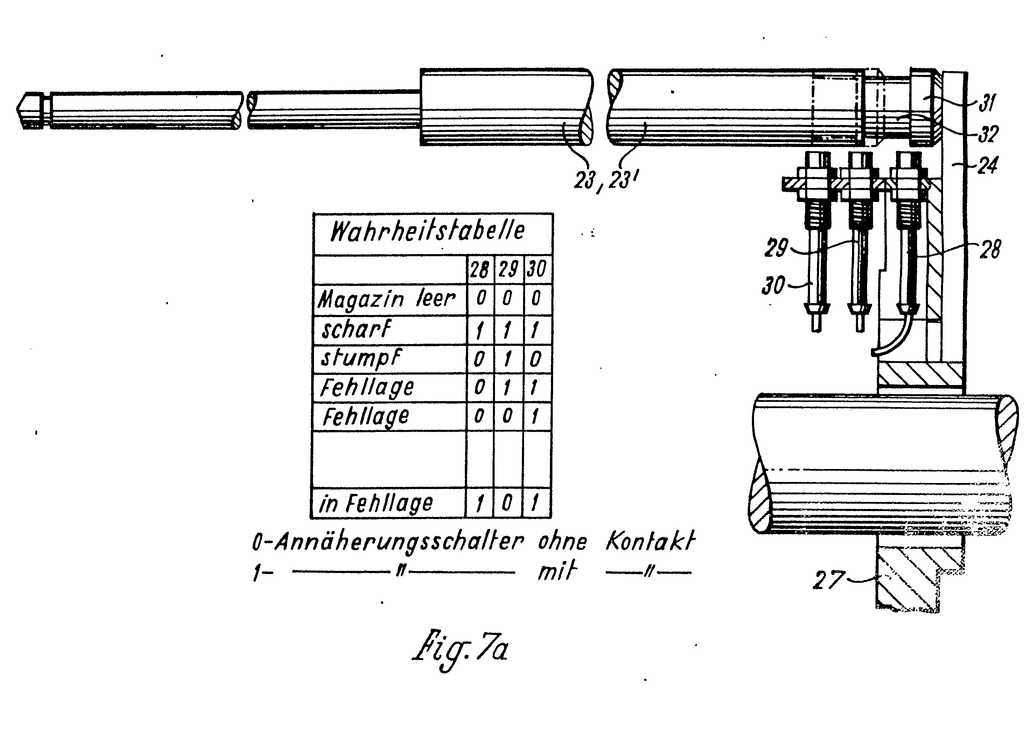

Das Magazin 7 ist in Fig. 3 schematisch und in Fig. 8 genauer dargestellt. Es wird dadurch gebildet, daß mehrere der Aufnahme der Tiefbohrwerkzeuge 3, 3' bzw. 23, 23' bestimmte Aufnahmerohre 8 – wie beim Magazin eines Trommelrevolvers – entlang einer Zylinderfläche angeordnet sind. Wie am besten an dem in Fig. 6 ganz links angeordneten Aufnahmerohr 8 und ferner an den daran angebrachten Schnitten gemäß Fig. 6a bis 6c zu ersehen, ist lediglich das hintere Drittel des Aufnahmerohres 8 mit vollem Querschnitt ausgebildet. Beim mittleren Drittel ist der Querschnitt über etwa einen Winkel von 90° bis 110° weggefräst; bei dem Querschnitt nach Fig. 6c ist der Querschnitt über einen Winkel von etwas mehr als 180° weggefräst. Der Übergang vom Querschnitt nach Fig. 6a zum Querschnitt nach Fig. 6b befindet sich an der Stelle a; der Übergang vom Querschnitt nach Fig. 6b zum Querschnitt nach Fig. 6c befindet sich an der Stelle b. Bei dieser Ausgestaltung der Aufnahmerohre 8 ist es möglich, Tiefbohrwerkzeuge, von denen eines (ganz links in Fig. 6) in seiner Kontur strichpunktiert dargestellt ist, zunächst derart von oben in den nach oben mit mehr als 180° offenen Teil eines Aufnahmerohres 8 einzulegen, daß dort der Bereich des Tiefbohrwerkzeugs, dessen Durchmesser gleich dem Innendurchmesser des Aufnahmerohres 8 ist, abgelegt wird, und dann das Werkzeug in Längsrichtung desselben so weit einzuschieben, daß es auch bei Drehung des gesamten Magazins 7 nicht herausfallen kann, weil dann der gesamte Bereich des Tiefbohrwerkzeugs in dem hinteren Teil des Aufnahmerohres 8, der den vollen Querschnitt nach Fig. 6a hat, gehalten wird.

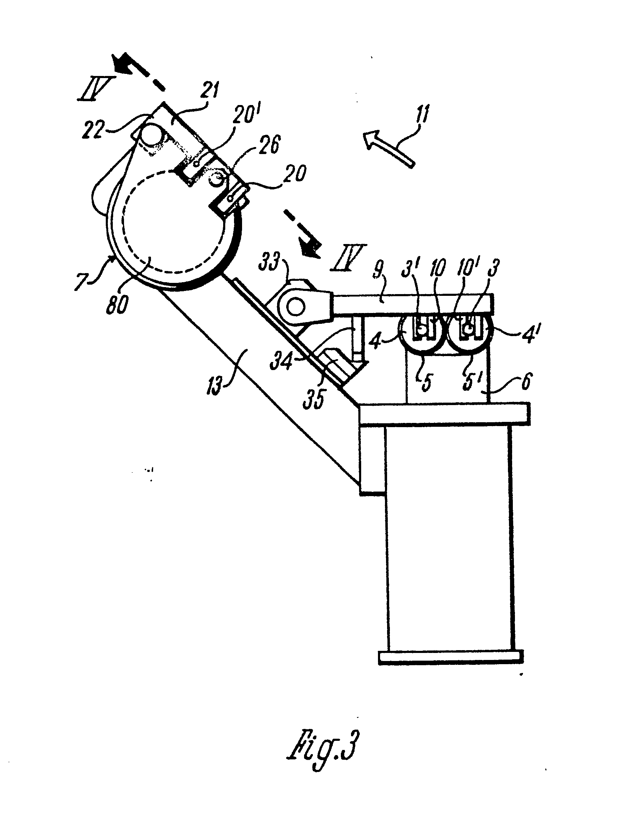

Ein Wechselarm 9, der – entsprechend den zwei Bohrspindeln 4, 4' – mit zwei Greifzangen 10, 10' versehen ist, erfaßt in der Arbeitsstellung die in den Bohrspindeln 4, 4' eingespannten Tiefbohrwerkzeuge 3, 3', sobald sie abgenutzt sind. Dies wird in an sich bekannter Weise durch Messung des Anspreßdruckes der Tiefbohrwerkzeuge an das Werkstück bei vorgegebener Vorschubgeschwindigkeit festgestellt und braucht daher im vorliegenden Zusammenhang nicht näher beschrieben zu werden. Die Spannvorrichtungen (nicht gezeigt) in den Bohrspindeln 4, 4' werden dann gelöst. Der Schlitten 6 mit den Bohrspindeln 4, 4' fährt nach rechts in Fig. 2 in die dort gezeigte Endstellung. Die Greifzangen 10, 10' halten die Tiefbohrwerkzeuge 3, 3'. Dann wird der Wechselarm 9 in Richtung des Pfeils 11 (Fig. 3) in die Ablage- und Ladestellung verschwenkt und legt die Tiefbohrwerkzeuge 3, 3' auf Prismen 12, 12' (siehe auch Fig. 5) ab, die ortsfest am Ausleger 13 angeordnet sind, der mit der Tiefbohrmaschine fest verbunden ist. Die Greifzangen 10, 10' werden dann geöffnet; die Tiefbohrwerkzeuge 3, 3' werden von Klauen 14, 14' einer Transporteinrichtung in die Aufnahmerohre 8 des Magazins 7 eingeschoben. Die Klauen 14, 14' befinden sich an dem (in Fig. 1) linken Ende von Stangen 15, 15', die über einen Steg 16 miteinander verbunden sind. An dem Steg greift eine Kolbenstange 17 an, die in einem doppeltwirkenden Zylinder 18 angeordnet und in beiden Richtungen hydraulisch verschiebbar ist. Daß in Fig. 1 und 2 die Klauen 14, 14' nicht auf derselben waagerechten Linie liegen, ist damit zu erklären, daß die Ebenen, in denen sie liegen, schräg gegenüber der Zeichenebene liegen. Das Hineinschieben der abgenutzten Tiefbohrwerkzeuge 3, 3' in die Aufnahmerohre 8 des Magazins 7 erfolgt so weit, bis die Spitzen 19, 19' der abgenutzten Tiefbohrwerkzeuge 3, 3' an Anschläge 20, 20' anstoßen, die über einen Bügel 21 und einen Ausleger 22 ebenfalls an dem bereits erwähnten Ausleger 13 ortsfest angeordnet sind. Nach diesem Einschieben der abgenutzten Tiefbohrwerkzeuge 3, 3' in das Magazin 7 wird letzteres gedreht, so daß sich andere Werkzeuge, also z. B. scharfe, d. h. noch nicht abgenutzte Werkzeuge 23, 23' über den Greifzangen 10, 10' befinden. Diese werden mittels der Klauen 14, 14' aus den Aufnahmerohren 8 des Magazins 7 heraus- und in die Auflage auf den Prismen 12, 12' hineingezogen. Dabei greifen die Klauen 14, 14' nach einer Kippbewegung der gemsamten Transporteinrichtung in die Nut 32 (Fig. 5) am Ende der Tiefbohrwerkzeuge 23, 23' ein. Die Klauen 14, 14' werden dann wegbewegt. Die Greifzangen 10, 10' erfassen die neuen Werkzeuge 23, 23'. Der Wechselarm 9 schwenkt in umgekehrter Richtung – also entgegengesetzt Pfeil 11 in Fig. 3 – wieder in die Arbeitsposition nach Figuren 1 bis 3. Der Schlitten 6 bewegt sich aus der in Fig. 2 gezeigten Position nach links, so daß die Bohrspindeln 4, 4' die Tiefbohrwerkzeuge 23, 23' in der Position, in der sich in Fig. 2 die Tiefbohrwerkzeuge 3, 3' befinden, umfassen. Die Spannvorrichtungen in den Bohrspindeln 4, 4' werden gespannt. Die Greifzangen 10, 10' werden gelöst. Der Wechselarm 9 schwenkt aus der Stellung heraus, so daß er die Vorschubbewegung des Schlittens 6 nicht behindern kann. Der nächste Arbeitstakt der Tiefbohrmaschine mit scharfen Tiefbohrwerkzeugen 23, 23' kann beginnen. Sobald die entsprechende Abnutzung auch dieser Tiefbohrwerkzeuge festgestellt wird, beginnt der nächste Wechselzyklus.

Aus der bisherigen Beschreibung ergibt sich bereits, daß die abgenutzten Tiefbohrwerkzeuge 3 bzw. 3' in das Magazin so weit in Fig. 1 nach links geschoben werden, bis sie an den Anschlägen 20, 20' anstoßen, also ihre Spitzen die mit 19, 19' bezeichneten Positionen einnehmen. Diese Lage ist unterschiedlich von der Lage der noch unbenutzten, also scharfen Tiefbohrwerkzeuge 23, 23'. Diese werden nach Wegklappen der Rückwand 80 in die eingezeichnete Position von links her (Fig. 1) in die Aufnahmerohre 8 im Magazin 7 eingeschoben und nehmen die für die Tiefbohrwerkzeuge 23, 23' eingezeichnete Position ein, in der sie so weit eingeschoben sind, daß sie mit ihrem (in Fig. 1) rechten Ende, also dem Einspannschaft, an einer Platte 24 anstoßen. Die Platte 24 hat in Höhe derjenigen Aufnahmerohre 8, die mit den Anschlägen 20, 20' und den Prismen 12, 12' fluchten, Ausnehmungen 25, 25'. Wenn also von links Tiefbohrwerkzeuge in die Aufnahmerohre 8 eingesteckt werden, so geht dies bei allen Aufnahmerohren 8 außer denen, deren linkes Ende durch die Anschläge 20, 20' verdeckt ist. Diese sind die einzigen, in deren Verlängerung nach rechts die Platte 24 keinen Anschlag darstellt, weil dort sich die Ausnehmungen 25, 25' befinden. Somit ist die Lage aller scharfen Tiefbohrwerkzeuge 23, 23', die – bei weggeklappter Platte 80 – von links so weit wie möglich in die Aufnahmerohre 8 gesteckt werden, durch Anschlag an der Platte 24 eindeutig definiert. Vgl. Fig. 5 ganz rechts oben und in Fig. 6 das Tiefbohrwerkzeug ganz links. Die Platte 80 kann nach Lösen des Griffes 26 weggeklappt werden.

Die Tiefbohrwerkzeuge können also zwei Lagen einnehmen:

a) die unbenutzten scharfen Tiefbohrwerkzeuge 23, 23' sind in die Aufnahmerohre 8 von links eingeschoben (manuell; bei weggeklappter Platte 80), und zwar bis zum Anschlag an Platte 24;

b) die abgenutzten Tiefbohrwerkzeuge 3, 3' sind in die Aufnahmerohre 8 von rechts her eingeschoben (von der Transporteinrichtung 14–18 nach Ablage durch den Wechselarm 9 auf Prismen 12, 12' bzw. in den oben offenen Teil der Aufnahmerohre 8), und zwar bis zum Anschlag an Anschlägen 20, 20', wobei das Einschieben durch die Platte 24 nicht behindert ist, da diese an diesen Stellen Ausnehmungen 25, 25' aufweist.

Die unterschiedliche Lage der abgenutzten sowie der noch unbenutzten scharfen Tiefbohrwerkzeuge wird dazu benutzt, um festzustellen, ob Tiefbohrwerkzeuge, die von der Transporteinrichtung 14–18 aus den Aufnahmerohren 8 nach rechts in eine Position gezogen werden, in der sie von den Greifzangen 10, 10' des Wechselarmes 9 erfaßt werden, benutzt sind oder noch scharf sind. Sind es abgenutzte Tiefbohrwerkzeuge, dann schaltet die Maschine ab und gibt ein Signal, auf das hin eine Neufüllung des Magazins mit scharfen Tiefbohrwerkzeugen veranlaßt wird. Auf diese Weise wird vermieden, daß in der Ablage- und Ladeposition des Wechselarmes 9 nach der Ablage der abgenutzten Tiefbohrwerkzeuge dieses erneut mit bereits abgenutzten Tiefbohrwerkzeugen geladen wird.

Es ist sichergestellt, daß der beschriebene Zyklus des Werkzeugwechsels so lange abläuft, wie den Aufnahmerohren 8 des Magazins 7 noch nicht abgenutzte, scharfe Tiefbohrwerkzeuge entnommen werden können.

Die Art und Weise der Feststellung, ob die Werkzeuge abgenutzt sind oder nicht, ist in Fig. 7a dargestellt. Auf dem Ausleger 13 ist eine Trägerplatte 27 angeordnet. Sie trägt in Richtung der Lage der Tiefbohrwerkzeuge im Magazin hintereinander drei Annäherungsschalter 28 bis 30. Bei der eingezeichneten Lage eines scharfen Tiefbohrwerkzeuges 23, 23', das mit seinem vorderen Bund 31 an der Anschlagplatte 24 anliegt, liegen alle Annäherungsschalter 28, 29, 30 auf kurzem Abstand zu einer Außenfläche des Tiefbohrwerkzeuges. Sie haben daher alle im Sinne ihrer Funktion mit dem Tiefbohrwerkzeug 23 oder 23' «Kontakt», liefern also ein Signal mit dem logischen Wert «1». In strichpunktierten Linien ist die Lage eines Tiefbohrwerkzeuges 3, 3' eingezeichnet, das abgenutzt ist, d. h. dessen Spitzen 19 bzw. 19' an den Anschlägen 20. 20' anliegen. Hier liefern die Annäherungsschalter 28, 29 bzw. 30 Signale mit den logischen Werten «0», «1», «0». Im einzelnen ergeben sich die verschiedenen Anzeigen aus der Wahrheitstabelle, die zu Fig. 7a dazugehört.

Das bedeutet, daß die Ablage abgenutzter stumpfer Werkzeuge im Magazin in einer anderen Lage erfolgt als das Einlegen scharfer Werkzeuge. Die Abtastung der Lage durch Annäherungsschalter oder andere Meßeinrichtungen erlaubt die Feststellung, ob die Tiefbohrwerkzeuge im Magazin noch scharf sind. Diese Feststellung erfolgt vor Übernahme von Tiefbohrwerkzeugen aus den Aufnahmerohren 8 in die Position, in der sich die Greifzangen 10, 10' in Ablage- und Ladeposition befinden, also für die Tiefbohrwerkzeuge, die sich in den Aufnahmerohren 8 befinden, die in der jeweiligen Stellung des Magazins 7 mit den Prismen 12, 12' fluchten und durch die Transporteinrichtung 14–18 nach rechts verschiebbar sind. Auf diese Weise wird vermieden, daß der automatische Wechselzyklus dazu führen kann, bereits abgenutzte Tiefbohrwerkzeuge in die Greifzangen 10, 10' des Wechselarmes 9 und von dort in die Bohrspindeln 4, 4' zu laden.

Die entsprechenden elektrischen Steuerungseinrichtungen ergeben sich für den Fachmann ohne weiteres. Es ist lediglich erforderlich, entsprechend der in Fig. 7a wiedergegebenen Wahrheitstabelle für den Fall des Vorhandenseins scharfer Werkzeuge den weiteren Zyklus freizugeben und für den Fall anderer Signale zu stoppen und diese Tatsache durch ein Hupsignal oder eine Lichtanzeige kenntlich zu machen.

Beim Ausführungsbeispiel und der dort gezeigten Abtastung durch Annäherungsschalter 28, 29, 30 entlang der axialen Richtung des Tiefbohrwerkzeuges ist hierzu die Nut 32 eingesetzt worden, die es gleichzeitig ermöglicht, die Tiefbohrwerkzeuge mittels der Klauen 14, 14' aus den Aufnahmerohren 8 des Magazins 7 herauszuziehen.

Der Wechselarm 9 ist drehbar in einem Lagerbock 33 am Ausleger 13 gelagert. Er wird in der Arbeitsstellung nach Fig. 1 bis 3 dadurch abgestützt, daß ein mit ihm verbundener Stützteil 34 auf einem Gegenlager 35 aufliegt. Den Drehantrieb des Wechselarms besorgt der hydraulische Drehzylinder 36 über ein Getriebe 37.

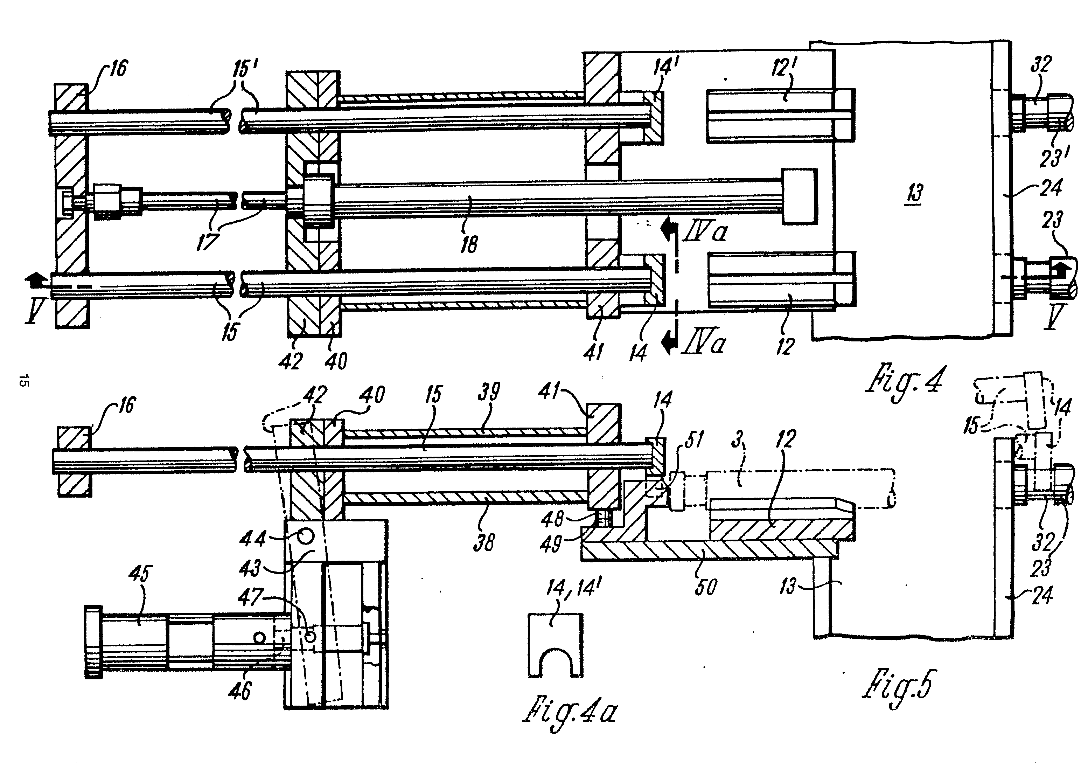

Die Figuren 4 und 5 zeigen die Transporteinrichtung, genauer: den Mechanismus zur Verschiebung der Klauen 14, 14'. Fig. 4 ist eine Schräg-Draufsicht auf Fig. 3. Die Klauen 14, 14', deren Form aus Fig. 4a ersichtlich ist, sind – wie bereits erwähnt – an den Stangen 15, 15' befestigt. Diese Stangen 15, 15' sind ihrerseits über den Steg 16 miteinander verbunden und über die Kolbenstange 17 mittels des Zylinders 18 hydraulisch in beiden Richtungen verschiebbar.

Damit die Klauen 14 in die Nut 32 in den Tiefbohrwerkzeugen einschwenken können, wie dies aus Fig. 5 rechts oben ersichtlich ist, muß die gesamte durch Stangen 15 mit Klauen 14, ferner durch Quersteg 16 und Zylinder 18 gebildete Transporteinrichtung kippbar sein. Dies erfolgt dadurch, daß die Stangen 15 und der Zylinder 18 in einem durch zwei parallele Platten 38, 39, sowie die beiden Querstege 40 und 41 gebildeten Gehäuse geführt sind. Dieses Gehäuse ist an der Schwenkplatte 42 fest angebracht, die in dem Lagerbock 43 um die Welle 44 gekippt werden kann.

Der Lagerbock 43 ist an dem Ausleger 13 angeordnet. Das Kippen der Schwenkplatte 42 erfolgt mittels des hydraulisch betätigten, doppelt wirkenden Zylinders 45, in dem eine Kolbenstange 46 geführt ist, die an der Schwenkplatte 43 über das Gelenk 47 angreift. Zu diesem Zweck ist das untere Ende der Schwenkplatte 42 als Gabel ausgebildet. Das Kippen erfolgt so, daß die einzelnen Teile die in Fig. 5 strichpunktiert eingezeichnete Position einnehmen, wobei der Übersichtlichkeit halber diese Kipplage lediglich für die Schwenkplatte 42, die Stangen 15 und die Klauen 14 dargestellt ist. – Mit dem Quersteg 41 verbunden ist ein Anschlag 48, der in der gezeigten Normallage auf dem Anschlag 49 aufsetzt, der wiederum an der Platte 50 angeordnet ist, die an dem Ausleger 13 befestigt ist. Die Platte 50 trägt ferner noch eine Anschlagleiste 51, an die von den Klauen 14, 14' das Tiefbohrwerkzeug 23, 23' herangezogen wird, bevor die Greifzangen 10, 10' es erfassen.

Fig. 6 zeigt im Detail das Magazin 7 mit den Aufnahmerohren 8. Die Aufnahmerohre 8 sind auf einem Zylinder 52 angeordnet und auf diesem durch Klemmstücke 53, die mit dem Zylinder 52 verschraubt sind, gehalten. Der Zylinder 52 ist integral mit einer Nabe 54 ausgebildet. Die Nabe 54 ist mit einer Welle 55 verbunden, die in dem Lagerrohr 56 mit Hilfe von Lagern 57 gelagert ist. Das Lagerrohr 56 ist mit dem Ausleger 13 verbunden. Der schrittweise und taktweise Antrieb der Welle 55, der die schrittweise Drehung des Magazins 7 bringt, erfolgt über Motor 58 und Schrittgetriebe 59.

Das anhand der Figuren 1 bis 8 beschriebene Ausführungsbeispiel geht von der Beschickung einer zweispindligen Tiefbohrmaschine aus. Entsprechend werden immer zwei Tiefbohrwerkzeuge gleichzeitig aus den beiden Spindeln 4, 4' entnommen, in zwei Aufnahmerohren 8 des Magazins 7 abgelegt und gleichzeitig zwei scharfe Werkzeuge 23, 23' wieder entnommen. Das bedeutet, daß der Abstand der Greifzangen 10, 10' (Fig. 3) dem Abtand der Spindeln entsprechen muß und daß die Aufnahmerohre 8 – allgemeiner ausgedrückt: die für die einzelnen Tiefbohrwerkzeuge vorgesehenen Aufnahmeeinrichtungen im Magazin – paarweise ebenfalls mit demselben Abstand angeordnet werden müssen, wobei die Schrittbewegung, mit der das Magazin weitergedreht bzw. – allgemein ausgedrückt: weiterbewegt – wird, so abgestimmt sein muß, daß jeweils in jedem Schritt ein anderes Paar sich dem Zugriff der Transporteinrichtung mit ebenfalls zwei Klauen eröffnet. Werden aus einem Paar Aufnahmerohre 8 zwei Tiefbohrwerkzeuge entnommen, dann bleiben diese Aufnahmerohre zunächst leer. Das Magazin bleibt in der Stellung und nimmt dieselben Tiefbohrwerkzeuge als stumpfe Werkzeuge nach der Nutzung wieder auf. Dann dreht sich das Magazin einen Schritt weiter und es werden zwei scharfe Werkzeuge entnommen.

Während das Ausführungsbeispiel von einer Art Trommelmagazin ausging, ist es auch möglich, andere Magazine aufzubauen, die sich nicht drehen, sondern Aufnahmeeinrichtungen etwa in verschiedenen Lagen übereinander aufweisen.

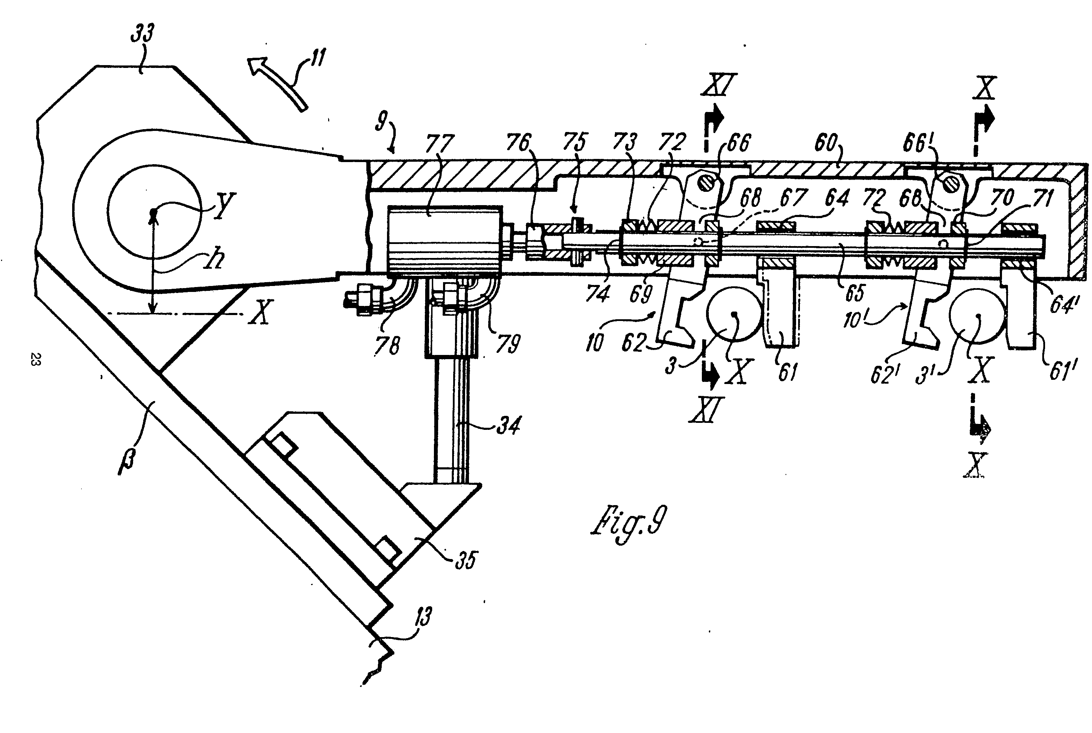

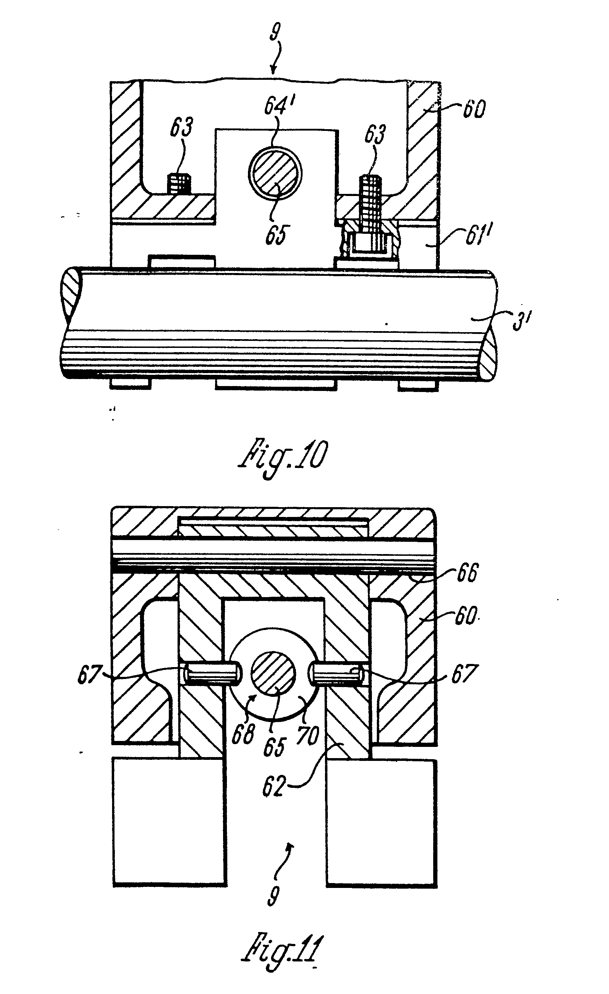

Fig. 9 zeigt im einzelnen den Aufbau des Wechselarmes 9. Er wird gebildet durch einen im Querschnitt U-förmigen unten offenen Träger 60. Die Greifzangen 10, 10' bestehen jeweils aus einem feststehenden Anschlagteil 61, 61' und einem beweglichen Andrückteil 62, 62'. Die feststehenden Anschlagteile 61, 61' sind, wie aus Fig. 10 ersichtlich, an dem Träger 60 mittels Schrauben 63 fest angebracht. In Lagerbuchsen 64, 64' ist ein Steuerschieber 65 verschiebbar. Dieser Steuerschieber 65 dient dazu, die bei 66, 66' am Träger 60 beweglich angelenkten Andrückteile 62, 62' so zu verschwenken, daß zwischen ihnen und den feststehenden Anschlagteilen 61, 61' die Tiefbohrwerkzeuge 3, 3' oder 23, 23' festgeklemmt werden. Zu diesem Zweck greifen an den Andrückteilen 62 bzw. 62' angeordnete Stifte 67 (vgl. Fig. 11) von beiden Seiten in den Ringspalt 68 ein, der gebildet wird zwischen den Ringen 69 und 70, die beide auf dem Steuerschieber 65 angeordnet sind, wobei der Ring 70 durch den Sicherungsring 71 auf dem Steuerschieber 75 gegen eine Verschiebung nach rechts gesichert ist, wohingegen der Ring 69 durch Tellerfedern 72 gegenüber einem weiteren Ring 73 abgestützt ist, der seinerseits durch den Sicherungsring 74 auf dem Steuerschieber 75 gegen eine Verschiebung nach links gesichert ist. Erfolgt nun eine Verschiebung des Steuerschiebers 65 in Fig. 9 nach rechts, so wird das Tiefbohrwerkzeug 3 bzw. 3' von dem Andrückteil 62 bzw. 62' mit einer Kraft gegen den Anschlagteil 61 bzw. 61' gedrückt, die davon abhängt, in welchem Maß die Tellerfedern 72 von dem Ring 73 zusammengepreßt werden. Eine solche Pressung beginnt, wenn der Andrückteil 62 an dem Tiefbohrwerkzeug 3 anliegt, so daß eine weitere Verschiebung des Rings 69 nach rechts nicht möglich ist. Bewegt sich von diesem Moment an der Steuerschieber 65 und mit ihm der Ring 73 nach rechts (In Fig. 9), dann werden die Tellerfedern 72 zusammengepreßt.

Der Steuerschieber 65 ist beweglich über eine Gabelverbindung 75 mit der Kolbenstange 76 eines doppeltwirkenden hydraulisch angetriebenen Zylinders 77 verbunden, dem unter Druck stehendes Medium über die Anschlüsse 78 bzw. 79 zugeführt wird.

Bei der gesamten Anordnung kommt es auf eine sehr hohe Genauigkeit der Positionierung der Tiefbohrwerkzeuge bezüglich der Aufnahmeöffnungen der Bohrspindeln 4, 4' an. Aus diesem Grunde liegt auch die Achse X der Tiefbohrwerkzeuge 3, 3' um den Abstand h bezüglich der Waagerechten niedriger als der Drehpunkt Y des Wechselarmes 9, damit sich bei einem Verschwenken des Wechselarmes 9 weg vom eingespannten Tiefbohrwerkzeug 3 bzw. 3' in Richtung des Pfeils 11 zunächst eine Bewegung des am Träger 60 feststehenden Anschlagteils 61 bzw. 61' seitlich weg vom Tiefbohrwerkzeug ergibt. Eine solche seitliche Bewegungskomponente ist aber dann gegeben, wenn in der bezeichneten Weise die Achse X um einen bestimmten Betrag h unterhalb des Drehpunktes Y angeordnet ist. Die Position z. B. des Anschlagteils 61 kurz nach Beginn der Schwenkbewegung ist in Fig. 9 strichpunktiert eingezeichnet. Auf diese Weise entsteht beim Wegfahren der Greifzangen 10, 10' von den eingespannten Tiefbohrwerkzeugen kein Klemmen oder Drücken od. dgl.

Aus den Figuren 9 bis 11 geht auch hervor, wie man mit ähnlicher Konstruktion an einem Wechselarm statt zwei auch vier oder sechs Greifzangen vorsehen kann; dies wäre dann der Fall, wenn man – wie oben erwähnt – auch entsprechend größere Magazine, ggf. mit anderen Ablagesystemen als dem trommelartigen Aufbau, einsetzen würde.

Es wird auf die beiden hiermit zusammenhängenden Anmeldungen EP-A-141 152 und EP-A-141 153 hingewiesen, die am selben Tag angemeldet wurden.

Bezugszeichenliste
4301 085 – «Verfahren zum Werkzeugwechsel an einer Tiefbohrmaschine», TBT Tiefbohrtechnik GmbH & Co. KG

a = Stelle des Übergangs von Fig. 6a auf 6b
b = Stelle des Übergangs von 6b auf 6c
X = Achse von 3
Y = Drehpunkt von 9
h = Abstand in der Höhe zwischen X, Y

| | |
|---|---|
| 1 | Bohrungen |
| 2 | Werkstück |
| 3. | Tiefbohrwerkzeug |
| 4 | Bohrspindel |
| 5 | Motoren |
| 6 | Schlitten |
| 7 | Magazin |
| 8 | Aufnahmerohre |
| 9 | Wechselarm |
| 10 | Greifzange |
| 11 | Pfeil |
| 12 | Prismen |
| 13 | Ausleger |
| 14 | Klauen |
| 15 | Stangen |
| 16 | Steg |
| 17 | Kolbenstange |
| 18 | Zylinder |
| 19 | Spitzen von 3 |
| 20 | Anschläge |
| 21 | Bügel |
| 22 | Ausleger |
| 23 | Tiefbohrwerkzeuge |
| 24 | Platte |
| 25 | Ausnehmungen |
| 26 | Griff |
| 27 | Trägerplatte |
| 28– | |
| 30 | Annäherungsschalter |
| 31 | Bund |
| 32 | Nut |
| 33 | Lagerbock |
| 34 | Stützteil |
| 35 | Gegenlager |
| 36 | Drehzylinder |
| 37 | Getriebe |
| 38 | Platte |
| 39 | Platte |
| 40 | Quersteg |
| 41 | Quersteg |
| 42 | Schwenkplatte |
| 43 | Lagerbock |
| 44 | Welle |
| 45 | Zylinder |
| 46 | Kolbenstange |
| 47 | Gelenk |
| 48 | Anschlag |
| 49 | Anschlag |
| 50 | Platte |
| 51 | Anschlagleiste |
| 52 | Zylinder |
| 53 | Klemmstücke |
| 54 | Nabe |
| 55 | Welle |
| 56 | Lagerrohr |
| 57 | Lager |
| 58 | Motor |
| 59 | Schrittgetriebe |
| 60 | Träger, U-förmig |
| 61 | Anschlagteil |
| 62 | Antriebsteil |
| 63 | Schrauben |
| 64 | Lagerbuchsen |
| 65 | Steuerschieber |
| 66 | Lager |
| 67 | Stift |
| 68 | Ringspalt |
| 69 | Ring |
| 70 | Ring |
| 71 | Sicherungsring |
| 72 | Tellerfedern |
| 73 | Ring |
| 74 | Sicherungsring |
| 75 | Gabelverbindung |
| 76 | Kolbenstange |
| 77 | Zylinder |
| 78 | Anschluß |
| 79 | Anschluß |
| 80 | Platte |

**Patentansprüche**

1. Vorrichtung zum Werkzeugwechsel in einer Tiefbohrmaschine, die mit einer oder mehreren drehangetriebenen (5) Bohrspindeln (4, 4') versehen ist, die auf einem Schlitten (6) in Richtung auf ein Werkstück (2) bewegbar sind, mit folgenden Merkmalen:

(a) die Vorrichtung weist ein Werkzeugmagazin (7) auf, das aus mehreren Aufnahmeeinrichtungen (8) besteht;

(b) die Vorrichtung weist ferner einen um eine Achse (Y) schwenkbaren Wechselarm (9) auf, der mit Greifzangen (10) versehen ist;

(c) der Wechselarm (9) ist schwenkbar zwischen einer

(c1) Ablage- und Ladeposition, in der er an das Werkzeugmagazin (7) abgenutzte Werkzeuge übergibt und aus dem Werkzeugmagazin scharfe Werkzeuge entnimmt, und einer

(c2) Arbeitsposition, in der er aus der oder den Bohrspindeln (4, 4') abgenutzte Werkzeuge entnimmt und an die Bohrspindeln scharfe Werkzeuge abgibt;

und gekennzeichnet duch folgende Merkmale:

(d) die Aufnahmeeinrichtungen (8) des Magazins (7), die Achse (Y) des Wechselarms (9) und die Bohrspindeln (4, 4') sind parallel zueinander angeordnet;

(e) es ist eine Transporteinrichtung (14–18) vorgesehen, die die Werkzeuge in der Ablage- und Ladeposition in axialer Richtung aus den Greifzangen in die Aufnahmeeinrichtungen bzw. umgekehrt schiebt;

(f) die Beförderung der Werkzeuge von der Ablage- und Ladeposition in Arbeitsposition bzw. umgekehrt erfolgt bei gleichbleibender zur Achse der Bohrspindel stets parallel versetzter Orientierung der Werkzeuge und bei Bewegung des Wechselarms in nur einer Ebene;

(g) das Magazin (7) ist derart verstellbar, daß in jeder Stellung des Magazins (7) eine Gruppe von Aufnahmeeinrichtungen (8), deren Zahl gleich der Zahl der Greifzangen (10, 10') bzw. Bohrspindeln (4, 4') ist, in der Ablage- und Ladeposition des Wechselarms (9) mit den Greifzangen (10, 10') derart ausgerichtet ist, daß eine Ablage der abgenutzten Werkzeuge (3, 3') von den Greifzangen (10, 10') an die Aufnahmevorrichtungen (8) des Magazins (7) bzw. ein Laden der Greifzangen (10, 10') mit scharfen Werkzeugen (23, 23') aus den Aufnahmeeinrichtungen (8) mittels der Transporteinrichtung erfolgt.

2. Vorrichtung nach Anspruch 1, dadurch gekennzeichnet, daß die Transporteinrichtung einen doppeltwirkenden Zylinder aufweist.

3. Vorrichtung nach Anspruch 2, dadurch gekennzeichnet, daß der Zylinder (18) mit seiner Kolbenstange (7) an einer Stange (15, 15') angreift, die die Werkzeuge (3, 3') mit ihrem stirnseitigen Ende schiebt, und daß das stirnseitige Ende der Stange Klauen (14, 14') aufweist, die die Werkzeuge (23, 23') dadurch ziehen, daß sie in Nuten (32) der Werkzeuge eingreifen und daß der den Zylinder (18), die Kolbenstange (17) und die Klauen (14, 14') enthaltende Teil der Transporteinrichtung kippbar ist, um die Klauen (14, 14') in Eingriff mit der Nut (32) der Werkzeuge (23, 23') zu bringen.

4. Vorrichtung nach Anspruch 1, oder einem der folgenden, dadurch gekennzeichnet, daß der Wechselarm (9) an einem Ausleger (13) seitlich der Tiefbohrmaschine angelenkt ist und die Ebene, in der er schwenkbar ist, senkrecht zur Achse der Bohrspindeln (4, 4') in die Arbeitsposition bewegt.

5. Vorrichtung nach Anspruch 1 oder einem der folgenden, dadurch gekennzeichnet, daß das Magazin (7) durch eine Vielzahl von Aufnahmerohren (8) gebildet wird, die entlang einer Zylinderfläche angeordnet sind, und daß das Magazin (7) schrittweise drehbar ist.

6. Vorrichtung nach Anspruch 1, dadurch gekennzeichnet, daß eine Meßeinrichtung (28, 29, 30) zur Feststellung der Lage der Werkzeuge in den Aufnahmeeinrichtungen (8) des Magazins (7) vorgesehen ist.

7. Vorrichtung zum Werkzeugwechsel in einer Werkzeugmaschine nach Anspruch 6, dadurch gekennzeichnet, daß die axiale Lage der abgenutzten Werkzeuge (3, 3') in den Aufnahmeeinrichtungen (8) des Magazins (7) eine andere ist als die der scharfen Werkzeuge (23, 23').

## Claims

1. An apparatus for changing tools in a deep boring machine which is provided with one or more boring spindles (4, 4') which are driven in rotation (5) and which are movable towards a workpiece (2) on a slide (6), having the following features:

(a) the apparatus has a tool magazine (7) comprising a plurality of receiving devices (8);

(b) the apparatus also has a change arm (9) which is pivotable about an axis (Y) and which is provided with gripping tongs (10);

(c) the change arm (9) is pivotable between:

(c1) a deposit and loading position in which it transfers worn tools to the tool magazine (7) and takes sharp tools from the tool magazine, and

(c2) a working position in which it takes worn tools from the boring spindle or spindles (4, 4') and delivers sharp tools to the boring spindles;

and characterised by the following features:

(d) the receiving devices (8) of the magazine (7), the axis (Y) of the change arm (9) and the boring spindles (4, 4') are arranged parallel ot each other;

(e) there is provided a transport means (14–18) which pushes the tools in the deposit and loading position in the axial direction out of the gripping tongs into the receiving devices and vice-versa;

(f) transportation of the tools from the deposit and loading position into the working position or vice-versa is effected with the tools remaining in the same orientation in which they are always displaced in parallel relationship relative to the axis of the boring spindles and with the change arm moving in only one plane;

(g) the magazine (7) is displaceable in such a way that in any position of the magazine (7), a group of receiving devices (8), the number of which is equal to the number of gripping tongs (10, 10') or boring spindles (4, 4') is aligned in the deposit and loading position of the change arm (9) with the gripping tongs (10, 10') in such a way that unloading of the worn tools (3, 3') from the gripping tongs (10, 10') to the receiving devices (8) of the magazine (7) and loading of the gripping tongs (10, 10') with sharp tools (23, 23') from the receiving devices (8) is effected by the transport means.

2. Apparatus according to claim 1 characterised in that the transport means has a double-acting cylinder.

3. Apparatus according to claim 2 characterised in that the cylinder (8) engages by means of its piston rod (7) a rod (15, 15') which pushes the tools (3, 3') with its front end, and that the front end of the rod has claws (14, 14') which pull the tools (23, 23') by virtue of engaging into grooves (32) in the tools and that the part of the transport means including the cylinder (18), the piston rod (17) and the claws (14, 14') can be tilted in order to bring the claws (14, 14') into engagement with the groove (32) in the tools (23, 23').

4. Apparatus according to claim 1 or one of the following claims characterised in that the change arm (9) is pivotally connected to a cantilever arm (13) laterally of the deep boring machine and the plane in which it is pivotable moves perpendicularly to the axis of the boring spindles (4, 4') into the working position.

5. Apparatus according to claim 1 or one of the following claims characterised in that the magazine (7) is formed by a plurality of receiving tubes (8) which are arranged along a cylindrical surface and that the magazine (7) is rotatable with a stepwise movement.

6. Apparatus according to claim 1 characterised in that there is provided a measuring (28, 29, 30) for detecting the position of the tools in the receiving devices (8) of the magazine (7).

7. Apparatus for changing tools in a machine tool according to claim 6 characterised in that the axial position of the worn tools (3, 3') in the receiving devices (8) of the magazine (7) is different from that of the sharp tools (23, 23').

## Revendications

1. Dispositif pour le remplacement d'outils dans une aléseuse pour perçage profond qui est muni d'un ou plusieurs arbres porte-foret (4, 4') montés en rotation (5), qui sont déplaçables sur une glissière (6) en direction d'une pièce a usiner (2) dans lequel:

(a) le dispositif présente un magasin pour outils (7) qui est constitué par plusieurs dispositifs récepteurs (8);

(b) le dispositif présente en outre un bras de remplacement (9) pivotable autour d'un axe (Y), qui est muni de griffes de serrage (10);

(c) le bras de remplacement (9) est pivotable entre

(c1) une position de dépôt et de chargement, dans laquelle il dépose dans le magasin a outils (7) les outils émoussés et reprend des outils aiguisés du magasin a outils, et

(c2) une position de travail, dans laquelle il reprend les outils émoussés du ou des arbres porte-foret (4, 4') et redépose sur ces arbres porte-foret des outils aiguisés; caractérisé en ce que:

(d) les dispositifs récepteurs (8) du magasin (7) l'axe (Y) du bras de remplacement (9) et les arbres porte-foret (4, 4') sont parallèles entre eux;

(e) il est prévu un dispositif transporteur (14–18) qui enlève les outils des griffes de serrage dans les positions de dépôt et de chargement en direction axiale pour les disposer dans les dispositifs récepteurs et inversement;

(f) le transport des outils depuis la position de dépôt et de chargement vers la position de travail et inversement s'effectue avec une orientation constante toujours décalée parallèlement par rapport à l'axe de l'arbre porte-foret et avec déplacement du bras de remplacement dans un plan seulement;

(g) le magasin (7) est réglable de telle façon que, dans chaque position du magasin (7), un groupe de dispositifs récepteurs (8), dont le nombre est égal au nombre des griffes de serrage (10, 10') ou des arbres porte-foret (4, 4'), soit dirigé dans la position de dépôt et de chargement du bras de remplacement (9), avec les griffes de serrage (10, 10'), de telle façon qu'un dépôt des outils émoussés (3, 3') par les griffes de serrage (10, 10') sur les dispositifs récepteurs (8) du magasin (7), ou un chargement des griffes de serrage (10, 10') avec des outils aiguisés (23, 23') provenant des dispositifs récepteurs (8), s'effectue par l'intermédiaire du dispositif transporteur.

2. Dispositif selon la revendication 1, caractérisé en ce que le dispositif transporteur présente un cylindre à double effet.

3. Dispositif selon la revendication 2, caractérisé en ce que le cylindre (18) est en prise, avec sa tige de piston (7), sur une tige (15, 15'), qui déplace les outils (3, 3') avec leur extrémité frontale, et que l'extrémité frontale de la tige présente des pattes 14, 14') qui tirent les outils (23, 23') par le fait qu'elles pénètrent dans des rainures (32) des outils et que la partie du dispositif transporteur, contenant le cylindre (18), la tige de piston (17) et les pattes (14, 14'), est basculant, afin d'amener les pattes (14, 14') en prise dans les rainures (32) des outils (23, 23').

4. Dispositif selon la revendication 1 ou l'une des suivantes, caractérisé en ce que le bras de remplacement (9) est articulé sur un cantilever (13) latéralement par rapport à l'aléseuse pour perçage profond, et que le plan, dans lequel il est pivotable, se déplace perpendiculairement à l'axe des arbres porte-foret (4, 4') dans la position de travail.

5. Dispositif selon la revendication 1 ou l'une des suivantes, caractérisé en ce que le magasin (7) est constitué par une pluralité de tubes récepteurs (8) qui sont disposés le long d'une surface cylindrique et que le magasin (7) est entrainable en rotation pas à pas.

6. Dispositif selon la revendication 1, caractérisé en ce qu'il est prévu un dispositif de mesure (28, 29, 30) destiné à fixer la position des outils dans les dispositifs récepteurs (8) du magasin (7).

7. Dispositif pour le remplacement d'outils dans une machine-outil selon la revendication 6, caractérisé en ce que la position axiale des outils émoussés (3, 3') dans les dispositifs récepteurs (8) du magasin (7) est différente de celle des outils aiguisés (23, 23').

Fig.1

Fig.2

Fig.3

*Fig. 4*

*Fig. 4a*

*Fig. 5*

EP 0 141 154 B1

*Fig.6c*

*Fig.6b*

*Fig.6a*

*Fig.6*

*Fig.8*

Fig.7

| Wahrheitstabelle | | | |
|---|---|---|---|
| | 28 | 29 | 30 |
| Magazin leer | 0 | 0 | 0 |
| scharf | 1 | 1 | 1 |
| stumpf | 0 | 1 | 0 |
| Fehllage | 0 | 1 | 1 |
| Fehllage | 0 | 0 | 1 |
| | | | |
| in Fehllage | 1 | 0 | 1 |

0-Annäherungsschalter ohne Kontakt
1- ———— " ———— mit ——"——

Fig. 7a

Fig.9

EP 0 141 154 B1

**Fig.10**

**Fig.11**